**Europäisches Patentamt**

**European Patent Office**

**Office européen des brevets**

(11) Veröffentlichungsnummer: **0 476 324 A2**

# EUROPÄISCHE PATENTANMELDUNG

(21) Anmeldenummer: **91113889.9**

(22) Anmeldetag: **20.08.91**

(51) Int. Cl.5: **B62L 3/02**

(30) Priorität: **17.09.90 DE 4029401**

(43) Veröffentlichungstag der Anmeldung:
**25.03.92 Patentblatt 92/13**

(84) Benannte Vertragsstaaten:
**AT BE CH DE DK ES FR GB GR IT LI LU NL SE**

(71) Anmelder: **Pellyfren AG**
**Gründenstrasse 82**
**CH-8247 Flurlingen(CH)**

(72) Erfinder: **Süle, Sandor**
**Hüttenlebenweg 42**
**CH-8240 Thayngen(CH)**

(74) Vertreter: **Hiebsch, Gerhard F., Dipl.-Ing. et al**
**Hiebsch & Peege Patentanwälte Postfach**
**464 Erzbergerstrasse 5a**
**W-7700 Singen 1(DE)**

(54) **Hydraulische Fahrradbremse.**

(57) Eine hydraulische Fahrradbremse mit wenigstens einem Geberzylinder und zumindest einem daran durch eine Flüssigkeitsleitung angeschlossenen Bremszylinder in einem Zylinderlager soll dadurch verbessert werden, daß der Bremszylinder (17) im Lagerauge (72) eines drehbaren Lagerelementes (70) ruht und dieses in vorwählbarer Stellung festlegbar ist. Zudem soll das Lagerelement (70) ein Lagerring sein, der in einem Durchbruch (54) eines einem Rad des Fahrers (10) zugeordneten Haltekörpers (52) vorgesehen ist.

Fig.6

EP 0 476 324 A2

Die Erfindung betrifft eine hydraulische Fahrradbremse mit wenigstens einem Geberzylinder und zumindest einem daran durch eine Flüssigkeitsleitung angeschlossener Bremszylinder in einem Zylinderlager, wobei die Flüssigkeitsleitung in einen volumenveränderlichen Raum des Bremszylinders mündet, durch dessen Volumenveränderung die Bewegung eines Bremselementes, beispielsweise eines Bremsschuhs, steuerbar ist.

Eine derartige hydraulische Fahrradbremse ist der DE-OS 37 12 734 zu entnehmen, welche ein in sich geschlossenes Hydrauliksystem aus Geberzylinder und Bremszylinder beschreibt. In der Praxis hat sich gezeigt, daß eine sehr genaue Einstellung der Bremszylinder im Verhältnis zu dem mit ihnen in Berührung kommenden Rad erforderlich ist, weshalb sich der Erfinder das Ziel gesetzt hat, die Lagerung der Bremszylinder in Radnähe zu verbessern.

Zur Lösung dieser Aufgabe führt, daß der Bremszylinder im Lagerauge eines drehbaren Lagerelementes ruht und dieses in vorwählbarer Stellung festlegbar ist. Dabei hat es sich als günstig erwiesen, das Lagerelement als Lagerring auszubilden, der in einem Durchbruch eines einem Rad des Fahrrades zugeordneten Haltekörpers vorgesehen ist.

Nach einem weiteren Merkmal der Erfindung ist das Lagerauge im Lagerring exzentrisch angeordnet, und dieser weist auf wenigstens einem Durchmesser unterschiedliche Wanddicken auf. Dies führt zu einer in Draufsicht teilweise halbmondartig ausgebildeten Form des Lagerringes, dessen Außenfläche in besonderer Ausführung der Erfindung querschnittlich gekrümmt ist, also einen Teil einer Kugelfläche bildet.

Auch die Innenfläche des Durchbruches des Halteringes ist in Anpassung an diese Außenfläche ausgebildet, d.h. querschnittlich konkav.

Der Lagerring mit seinem exzentrischen Lagerauge kann somit gegenüber dem Haltekörper gedreht und beliebig eingestellt werden, ohne daß er aus dem Durchbruch des Haltekörpers herausfällt. Dank eines weiteren wesentlichen Merkmals, nämlich eines Radialspaltes im Lagerring kann auch dessen Durchmesser begrenzt durch Zusammendrücken des Lagerringes verkleinert werden, was eine zusätzliche Anpassung an die Größe des einzusetzenden Bremszylinders erlaubt.

Die Veränderung des Durchmessers des Lagerringes ist durch den Klemmkörper auf einfache Weise durchführbar, da dieser ebenfalls an einer Seite seines Durchbruches geschlitzt ist und beidseits des Schlitzes Klemmbacken bildet, welche durch ein Schraubelement od.dgl. in ihrer Distanz unter Veränderung der Schlitzbereiche einstellbar sind.

Bezüglich weiterer erfindungsgemäßer Merkmale wird auf die Unteransprüche Bezug genommen.

Die beschriebene und beanspruchte Ausbildung der Zylinderlagerung ist vornehmlich für Fahrräder bestimmt, kann jedoch auch bei anderen Bremshalterungen im Rahmen der Erfindung Anwendung finden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:

Fig. 1: eine Seitenansicht eines Fahrrades mit Bremszylinder enthaltender Fahrradbremse;

Fig. 2: ein gegenüber Fig. 1 vergrößertes Detail der Fahrradbremse im teilweisen Längsschnitt;

Fig. 3: eine teilweise geschnittene Anordnung der Bremszylinder am Fahrrad;

Fig. 4: eine Seitenansicht einer Bremszylinderlagerung;

Fig. 5: eine geschnittene Draufsicht auf die Bremszylinderlagerung in anderer Zuordnung ihrer Teile;

Fig. 6: eine Seitenansicht der Bremszylinderhalterung in zu Fig. 4 geänderter Betriebsstellung;

Fig. 7: eine teilweise geschnittene Draufsicht auf einen Bremszylinder in seiner Lagerung.

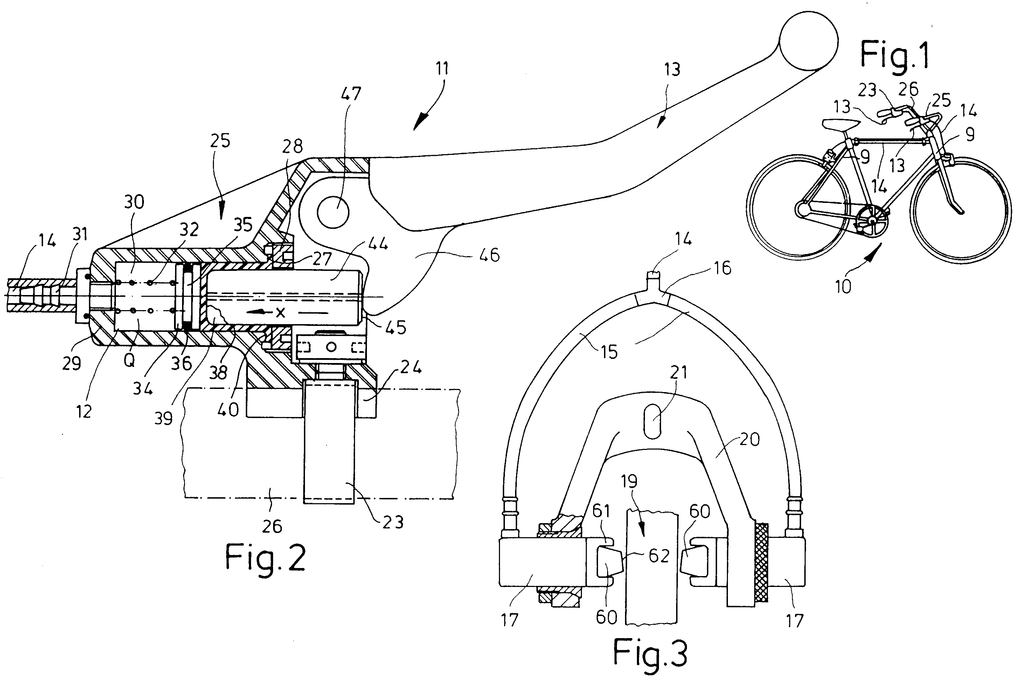

Ein Fahrradbremssystem 11 für ein in Fig. 1 skizziertes Fahrrad 10 besteht aus einem Geberzylinder 12 mit Handhebel 13, einer vom Geberzylinder 12 ausgehenden Bremsleitung 14 und einem Paar von Bremszylindern 17 beidseits eines Rades 19 eines in den Fig. 2 bis 7 nicht weiter dargestellten Zweiradfahrzeuges.

Die Bremszylinder 17 sind in Fig. 3 mittels einer gabelartigen Halterung 20 an einen Teil 21 einer Radgabel 9 od.dgl. angefügt und über Leitungsbogen 15 sowie ein T-Stück 16 an die Bremsleitung 14 angeschlossen.

Der Geberzylinder 12 sitzt unter Zwischenschaltung einer Klemmschelle 23 mit einem Sockelstück 24 seines Zylindergehäuses 25 fest an einer Lenkstange 26 und weist nach Fig. 2 eine zylindrische Druckkammer 30 auf, in der sich eine Schraubenfeder 32 einends gegen eine Kammerstirnwand 29 abstützt und andernends einen Scheibenkolben 34 berührt. Dieser nimmt in einer Umfangsnut 35 einen O-Ring 36 auf und schmiegt sich mit seiner Schraubenfeder 32 abgekehrten Stirn an einen topfartigen Kunststoffeinsatz 38 aus elastischem Werkstoff an, der mit einem krempenartigen Radialkragen 40 zwischen einer Ringschulter 27 des Zylindergehäuses 25 und einem Klemmring 28 festgelegt ist.

Im Ringraum 39 des elastischen Kunststoffeinsatzes 38 lagert ein Druckbolzen 44, an dessen freier Stirn 45 ein Nocken 46 des an einem Bolzen 47 drehbar gelagerten Handhebels 13 angreift. Bei Betätigung des Handhebels 13 wird der Druckbolzen 44 in Druckrichtung x geschoben und damit auch der Scheibenkolben 34. Dank des topfartigen elastischen Kunststoffeinsatzes 38 erfolgt der Ausschub der in der Druckkammer 30 befindlichen Bremsflüssigkeit Q in die schlauchförmige Bremsleitung 14 leckfrei.

Der Bremszylinder 17 entspricht in seinem Aufbau etwa jenem Geberzylinder 12 und ist beispielsweise ebenfalls mit einem tropfartigen Kunststoffeinsatz ausgestattet.

Die Bremsflüssigkeit Q in der Druckkammer drückt bei Betätigung des Geberzylinders 12 einen Bremsschuh 60, der von Seitenzungen 61 eines Gehäuses beidseits übergriffen und mit einer zur Zylinderachse geneigten Bremsfläche 62 versehen ist, gegen eine bei 19 angedeutete Felge. Gemäß Fig. 3 stehen einander die Bremsflächen 62 zweier Bremsschuhe 60 gegenüber.

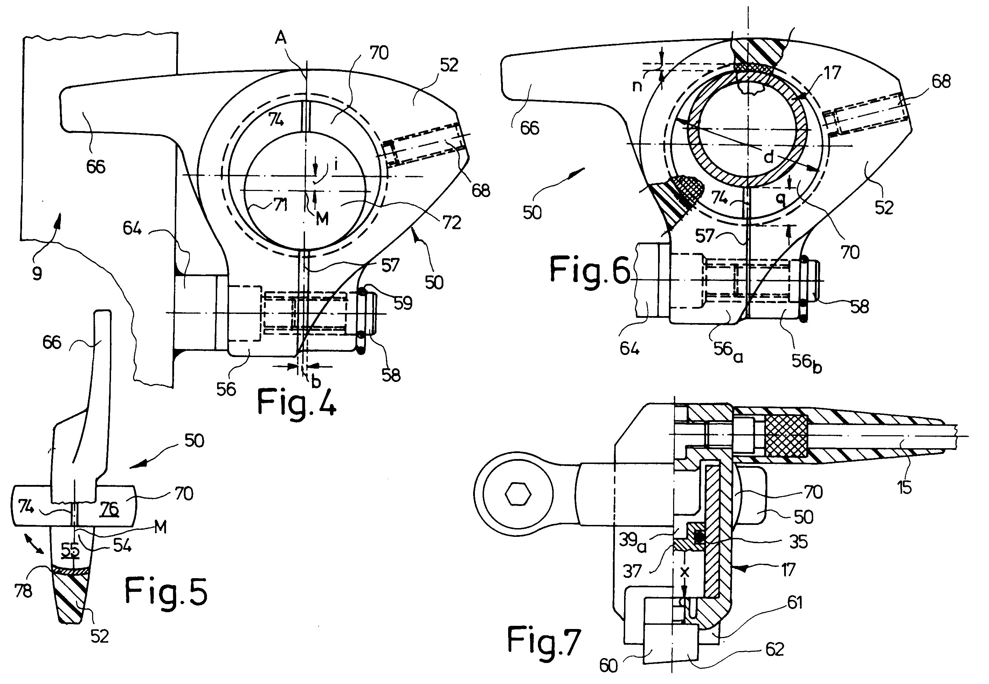

Jeder der Bremszylinder 17 ist in einem Zylinderlager 50 vorgesehen, das an der in Fig. 4 bis 6 bei 9 angedeuteten Radgabel sitzt und einen flachen Klemmkörper 52 mit kreisrundem Klemmkörperdurchbruch 54 aufweist. Der in Seitenansicht nach Fig. 4, 6 etwa dreiecksförmige Klemmkörper 52 ist -- in der dort dargestellten Einbaulage vom Klemmkörperdurchbruch 54 abwärts -- im Bereich eines angeformten Haltesteges 56 geschlitzt; dieser Schlitz 57 trennt zwei Teile $56_a$, $56_b$ jenes Haltesteges 56; die Schlitzbreite b ist in Abhängigkeit von der Spannstellung einer beide Teile $56_a$, $56_b$ durch setzenden Schraube 58 bei Überführung aus der in Fig. 4 gezeigten Ruhelage in eine Spannstellung verringerbar (Fig. 6). Die Schraube 58 liegt dem äußeren Teil $56_b$ des Haltesteges 56 unter Zwischenschaltung einer Ringfeder 59 aus Federstahl an und ist andernends in eine Schrauböffnung einer Schraubbüchse 64 der Radgabel 9 eingesetzt.

Oberhalb der Schraubhülse 64 ist eine flügelartige Anformung 66 des Klemmkörpers 52 zu erkennen, die bei Bewegung des Zylinderlagers 50 an der Radgabel 9 anschlägt.

Gegenüber der Flügelanformung 66 durchsetzt in einer zum Klemmkörperdurchbruch 54 etwa radialen Richtung den Klemmkörper 52 ein Gewindestift 68, mit dem ein im Klemmkörpderdurchbruch 54 ruhender Lagerring 70 in diesem festgeklemmt werden kann.

Der Lagerring 70 nimmt in einem von einer zylindrischen Innenfläche 71 begrenzten Lagerauge 72 den Bremszylinder 17 auf. Dieses Lagerauge 72 ist in einem Abstand i zur Mittelachse M des Lagerringes 70 in diesem exzentrisch angeordnet, so daß letzterer nahezu einen halbmondförmigen Grundriß besitzt, der eine größte Breite q und eine kleinste Breite n aufweist (Fig. 6). Eine Achse A des Lagerrings 70 ist Symmetrieachse.

An seiner größten Breite q ist der Lagerring 70 mit einem Radialspalt 74 ausgestattet, der bevorzugt in seiner Achse A liegt. Die Augenweite d kann dank des Radialspaltes 74 durch Betätigung der Schraube 58 -- und Verminderung der Schlitzbreite b -- verkürzt und fest an den Bremszylinder 17 gedrückt werden.

Die Außenfläche 76 des Lagerringes 70 ist querschnittlich sphärisch gekrümmt, d.h. ein ringartiger Ausschnitt aus einer Kugeloberfläche des Durchmessers d. Die Innenfläche 55 des Klemmkörperdurchbruches 54 ist als anschmiegbare Gegenfläche ausgebildet, also ebenfalls querschnittlich sphärisch gekrümmt. Ist das Zylinderlager 50 aus Metall, kann diese Innenfläche 55 mit dem Zylinderlager 50 einstückig sein. Im Falle eines Zylinderlagers 50 aus Kunststoff empfiehlt sich eine gesonderte und ihrerseits ringartige Sitzeinlage 78 (Fig. 5).

Der Lagerring 70 ruht bei gelockerter Schraube 58 drehbar in der Sitzeinlage 78 bzw. dem Zylinderlager 50, wie dies in Fig. 5 angedeutet ist. Hierdurch ist die Einstellung eines eingeschobenen Bremszylinders 17 um die Mittelachse M problemlos möglich.

Das gesamte beschriebene Bremssystem ist leckfrei, da die Bremsflüssigkeit Q auch in den Bremszylindern 17 nicht ungewollt auszutreten vermag. Sie füllt am Bremszylinder 17 einen Innenraum 39a eines des Kunststoffeinsatzes, dessen Stirnwand 37 durcfh die Bremsflüssigkeit Q in Richtung x gedrückt wird.

Dabei wird der Bremsschuh 60 ausgeschoben. Dieser wird bei Verminderung des Druckes der Bremsflüssigkeit Q durch eine Schraubenfeder zurückgeholt.

## Patentansprüche

1. Hydraulische Fahrradbremse mit wenigstens einem Geberzylinder und zumindest einem daran durch eine Flüssigkeitsleitung angeschlossenen Bremszylinder in einem Zylinderlager, wobei die Flüssigkeitsleitung in einen volumenveränderlichen Raum des Bremszylinders mündet, durch dessen Volumenveränderung die Bewegung eines Bremselementes, beispielsweise eines Bremsschuhs, steuerbar ist,

   dadurch gekennzeichnet,

   daß der Bremszylinder (17) im Lagerauge (72) eines drehbaren Lagerelements (70) ruht und dieses in vorwählbarer Stellung festlegbar ist.

2. Fahrradbremse nach Anspruch 1, dadurch gekennzeichnet, daß das Lagerelement ein Lagerring (70) ist, der in einem Druchbruch (54) eines einem Rad des Fahrrades (10) zugeordneten Haltekörpers (52) vorgesehen ist.

3. Fahrradbremse nach Anspruch 1 oder 2, dadurch gekennzeichnet, daß das Lagerauge (72) im Lagerring (70) exzentrisch angeordnet ist und dieser auf wenigstens einem Durchmesser unterschiedliche Wanddicke (n, q) aufweist, wobei der Lagerring (70) in Draufsicht bevorzugt wenigstens teilweise halbmondartig ausgebildet ist.

4. Fahrradbremse nach einem der Ansprüche 1 bis 3, dadurch gekennzeichnet, daß die Außenfläche (76) des Lagerrings (70) querschnittlich gekrümmt ist.

5. Fahrradbremse nach Anspruch 1 und 4, dadurch gekennzeichnet, daß die Außenfläche (76) des Lagerrings (70) Teil einer Kugelfläche ist.

6. Fahrradbremse nach einem der Ansprüche 1 bis 5, dadurch gekennzeichnet, daß die Innenfläche (55) des Durchbruches (54) des Haltekörpers (52) in Anpassung an die Außenfläche (76) des Lagerrings (70) einen konkaven Querschnitt aufweist.

7. Fahrradbremse nach wenigstens einem der Ansprüche 1 bis 6, dadurch gekennzeichnet, daß der Lagerring (70) einen radialen Spalt (74) aufweist, wobei gegebenenfalls der radiale Spalt (74) durch den Bereich größter Wanddikke (q) des Lagerringes (70) verläuft.

8. Fahrradbremse nach wenigstens einem der Ansprüche 1 bis 7, dadurch gekennzeichnet, daß der Haltekörper (52) einen von seinem Durchbruch (54) ausgehenden Trennschlitz (57) aufweist, wobei gegebenenfalls der Trennschlitz (57) von Klemmbacken ($56_a$, $56_b$) begrenzt ist und diese durch ein Spannelement, beispielsweise eine Schraube (58), verbunden sind.

9. Fahrradbremse nach wenigstens einem der Ansprüche 1 bis 8, dadurch gekennzeichnet, daß die Schraube (58) den Haltekörper (52) mit dem Fahrrad (10) verbindet, und/oder der Halte- oder Klemmkörper (52) scheibenartig ausgebildet ist.

10. Fahrradbremse nach wenigstens einem der Ansprüche 1 bis 9, dadurch gekennzeichnet, daß von dem Halte- oder Klemmkörper (52) etwa parallel zum Spannelement bzw. zur Schraube (58) wenigstens eine Anschlagrippe (66) od.dgl. Anformung abragt, und/oder, daß in den Halte- oder Klemmkörper (52) etwa radial zu seinem Durchbruch (54) wenigstens ein einstellbares Klemmorgan (68) eingefügt ist.

Fig.1

Fig.2

Fig.3

EP 0 476 324 A2

Fig.6

Fig.7

Fig.4

Fig.5